# EUROPEAN PATENT APPLICATION

(11) **EP 3 680 883 A1**
(43) Date of publication of application: **15.07.2020**
(21) Application number: 19151299.5
(22) Date of filing: 11.01.2019
(51) Int. Cl.: G09G 3/20, G09G 3/3225, G09G 5/10, G06F 3/147

(54) **A DISPLAY DEVICE AND A VEHICLE COMRISING THE DISPLAY DEVICE**

(71) Applicant: AUDI AG, 85045 Ingolstadt (DE)
(72) Inventor: Hélot, Jacques, 85051 Ingolstadt (DE); Belz, Karsten, 85051 Ingolstadt (DE)

(57) **Abstract**

The invention is concerned with a display device (16) comprising: a display panel (17) comprising a pixel matrix (43) and a control circuitry (18), wherein the control circuitry (18) is designed to actuate pixel elements of the pixel matrix (43) for displaying at least one graphic display object (19). A luminosity sensor arrangement (L) is designed to estimate an intensity of the light (24) independently for different portions (B1, B2, B3) of the display panel (17) and provide an intensity signal (X1, X2, X3) to the control circuitry (18). The control circuitry (18) is adapted to adjust the intensity of the light (31) radiating from each of the pixel element comprised in the respective portion (B1, B2, B3) of the display panel (17) individually.

## Description

The invention is concerned with a display device and a vehicle comprising such a display device.

Nowadays a display device has become an integral part of a vehicle. The display device usually comprises a display panel or a touchscreen which usually functions as a user interface or a graphical user interface (GUI). This enables a user, who can be a driver of the vehicle, to communicate with and/or to operate other devices in the vehicle remotely by means of the display panel or the touchscreen. Usually, such a display device can be integrated within a dashboard or within a central console of the vehicle. Due to an increasing number of operating and comfort functions available for the user in the vehicle, it is necessary on one hand to enable a simplified operation of these functions and on the other hand to present a multitude and/or different types of information in a clear and understandable manner to the user. Furthermore, in order to enable different functionalities, the display panel may tend to be of an increased size so that, for example, the display panel can be used by a multitude of persons travelling by the vehicle. However, a perceivability of display content of the display panel can be problematic in the presence of a bright light, such as a light from the sun. For example, when the light incident on the display panel is strong, then the perceivability of the display panel is reduced. Whereas, in absence of the light or when the sun is located behind the display panel, the display panel may appear brighter. Hence, in order to enable a human eye to perceive the display panel in a comfortable manner, it is necessary to enable a uniform perceivable brightness of the display panel.

Document DE 10 2014 118 314 A1 discloses a method for adapting a brightness of high contrast image of an environmental region of a motor vehicle, wherein the brightness of the high contrast image is adapted according to the brightness of the environmental region. However, an adjustment of the brightness of the display panel is not disclosed.

Document DE 10 2012 019 506 A1 discloses a vehicle with a windowpane, which is used as a display area of a display instrument in a partial area and limits a passenger cabin. The partial area of the windowpane is switched between two conditions with different light transmission behavior. The windowpane has a front window or a side window, which is arranged next to driver- or front passenger seat. The light absorption in the partial area is higher in the latter condition than in the former condition.

Document DE 10 2016 212 813 A1 discloses a vehicle comprising an evolving display device, in which a brightness of different display elements can be adjusted in different areas of the display device.

An object of the present invention is to provide a display device which provides a clear display of display contents at various environmental conditions. The term "clear display" implies that a user can view the display contents in an ergonomically comfortable manner such that all the information of the display content are perceivable by the user.

The object is accomplished by the subject matter of the independent claims. Advantageous developments with convenient and non-trivial further embodiments of the invention are specified in the following description, the independent claims and the figures.

The invention provides a display device comprising a display panel and a control circuitry. The display panel comprises a pixel matrix, wherein the control circuitry is designed to actuate pixel elements of the pixel matrix for displaying at least one graphic display object. The display panel, for example, may comprise organic light emitting diodes (OLED) and/or thin film transistors (TFT) as pixel elements. The pixel elements may be distributed over a total area of the display panel. The control circuitry can control an actuation of the pixel elements as per a required location or position of the at least one graphic display object to be displayed on the display panel. The output of the at least one graphic display object may be requested by a control signal that may be received by the control circuitry.

However, a perceivability of the at least one graphic display object which is displayed by such a display device may be problematic, when a light of higher intensity or brightness is incident on a surface of the display panel. For example, when the display device is facing an external light source, for example the sun or a lamp, then due to the light from the external light source which is incident on the display panel, the perceivability of the at least one graphic display object is minimized or the display panel may appear less bright. However, in absence of light or when the external light source is located behind the display panel, the display panel may appear brighter. In order to achieve uniform perceivability, so that the display panel may appear with a uniform predetermined brightness, the control circuitry is adapted to adjust an intensity of light radiating from the pixel elements as a function of an intensity signal, wherein the intensity signal is provided by a luminosity sensor arrangement which is designed to estimate an intensity of the light from the external light source. The luminosity sensor arrangement may comprise a plurality of luminous sensors, such as at least one photo sensitive diode and/or at least one camera. In other words, a predefined perceived brightness may be defined, for example, the predefined perceived brightness may be set by a user according to the user's choice of brightness in order to perceive the display panel. For example, in the absence of an external light source, such as in a dark room or a dark environment, the predefined perceived brightness may be set. When the said display device with the predefined perceived brightness is taken into the environment with the external light source, or the display panel is exposed to light from the external light source, then the luminosity sensor arrangement estimates the intensity of the light from the external light source that is incident on the display panel. Then, the luminosity sensor arrangement provides the intensity signal to the control circuitry. Upon receiving the intensity signal, the control circuitry is adapted to adjust the intensity of the light radiating from the pixel elements of the display panel so as to achieve the predefined perceived brightness. For example, in the presence of the light from the external light source, the intensity of the light radiating from the pixel elements can be increased so as to achieve the predefined perceived brightness. Hence, a constant level of brightness with the predefined perceived brightness as set by the user can be realized.

Furthermore, the display panel may be of a considerable size, such that the intensity of light from the external light source that is incident on the display panel can be variable. For example, a portion of the display panel can be covered by a shadow of a nearby external object, such that a light of lower intensity or no light may be incident on the respective portion of the display panel. However, the other remaining portion of the display panel, which is not covered by the shadow, may be exposed to a higher intensity of light from the external light source. In this case, the intensity of light radiating from the pixel elements needs to be adjusted in such a manner that a homogenous brightness of the display panel as per the said predefined perceived brightness can be realized.

According to the invention, the luminosity sensor arrangement is designed to estimate the intensity of the light independently for different portions of the display panel. This is of advantage, because this enables the luminosity sensor arrangement to estimate the intensity of the light independently for different portions of the display panel. For example, in case of the display panel with a considerable size, where the different portions of the display panel may be exposed to a different degree of intensity of the light from the external light source. In such a case, a respective luminosity sensor of the luminosity sensor arrangement can estimate the intensity of the light for the corresponding portion of the display panel and send a respective intensity signal for each respective portion of the display panel to the control circuitry. Hence, the luminosity sensor arrangement can estimate the intensity of the light on different portions of the display panel independently.

Furthermore, the control circuitry is adapted to adjust the intensity of the light radiating from each of the pixel elements comprised in the respective portion of the display panel individually. In other words, upon receiving the respective intensity signal corresponding to the respective portion of the display panel, the control circuitry is adapted to adjust the intensity of the light radiating from each pixel element corresponding to the respective portion as a function of the respective intensity signal so that the predefined perceived brightness is achieved for the respective portion of the display panel. It is further thinkable, that each portion can comprise of a corresponding gate driver, wherein the luminosity of each portion of the display panel can have a single luminosity which can be adjusted by the control circuitry as a function of the respective intensity signal. This is of advantage, because this can lead to a lower requirement of computing power. Furthermore, in case where the display panel comprises thin film transistors (TFT) as pixel elements, then the luminosity of each portion of the display panel can be created by a respective backlight, wherein the luminosity of the respective backlight can be adjusted by means of the control circuitry as a function of the respective intensity signal.

Hence, a uniform or homogenous brightness of the whole display panel can be achieved, that is the predefined perceived brightness can be realized for each of the different portions of the display panel as a function of the corresponding respective intensity signal. Hence, a uniform predefined perceive brightness of the display panel can be achieved which enables an ergonomic display as well as a homogenous view to the eyes of the user.

The invention also comprises embodiments that provide features which afford additional technical advantages.

In one embodiment, the display panel may comprise at least one bent surface and/or at least one folded surface. The display panel may comprise flexible OLED which is based on a flexible substrate, such as a plastic, metal or flexible glass. This is of advantage, because this can enable the display panel of the display device to be integrated on various kinds of surfaces, such as a bent surface or a surface with a curved contour. For example, such a display device can be integrated in a vehicle, wherein the display panel may be integrated alongside the curved windscreen or even extend towards a vehicle door. Furthermore, the display device with such a display panel can be integrated along a cylindrical or a polygonal surface providing a 360° viewing range.

In one embodiment, the display panel may comprise a plurality of segments, wherein each segment may comprise a respective part of the pixel matrix. In other words, the plurality of segments of the display panel may enable the display panel to be integrated on curved surfaces. Furthermore, such a display panel may comprise different kinds of display technologies or a combination different kinds of display technologies, such as the OLED and/or TFT and/or Liquid crystal display (LCD). The integration of the display panel comprising the plurality of segments can be realizable on curved surfaces, as each of the plurality of segments can be integrated along a curvature of the curved surface. Thus, the integration of the display panel comprising the plurality of segments can be realizable on curved surfaces can be realized even when the display panel might not be comprise a flexible OLED. Hence, this can enable the display panel to provide a viewing range of about 270° to even 360°. For example, such a display panel with the plurality of segments can be integrated on the cylindrical surface or the polygonal surface, wherein the segments of the display panel can enable the integration. However, the viewing range can be about 15° and/or 30° and/or 60° and/or 90° and/or 120° and/or 150° and/or 180° and/or 220° and/or 250° and/or 270°, furthermore, the viewing range can lie in between values of the aforementioned viewing range values.

In one embodiment, the control circuitry may be designed to actuate at least one of the plurality of segments and/or customize a display of the at least one graphic display object by the respective segment as a function of an identification signal, wherein the identification signal can be sent by an identification sensor upon an identification of at least one person or a predefined user at or within a predefined distance from the respective segment. In other words, the display device with such a display panel with a plurality of segments may be integrated in the vehicle as a wrap-around display, that is the display panel comprising the plurality of segments may be wrapped around a seating region of the vehicle. In this case, each of the plurality of segments may be designed to function as separate display panels for each of the passengers travelling inside the vehicle including the driver, such that only those segments can be activated by the control circuitry where the identification sensor, for example a camera, can identify the presence of the at least one person at the predefined distance or less than the predefined distance from the corresponding segment. Then the corresponding identification sensor can send the identification signal to the control circuitry, which can then activate the corresponding segment of the display panel. This is of advantage, because this may enable the activation of the respective segments of the display panel wherever the at least one person may be seated. Furthermore, this ensures that the respective segment where no person is seated in front of the respective segment, the displaying or activation of the corresponding segment can be avoided. This in turn can lead to a conservation of electrical energy. Furthermore, the identification sensor may be designed to identify the predefined user at the predefined distance from the respective segment. This is of advantage, because the displaying of the corresponding segment can be customized as per predefined user settings, such as the predetermined perceived brightness, or a predetermined perceived contrast of the display panel as well as content to be displayed on the display panel can be customized as per the predefined user settings of the predefined user.

In one embodiment, the control circuitry may be designed to enable the display of a part of the at least one graphic display object by the segment, such that another remaining part of the at least one graphic display object may be displayed by at least one adjustment segment. In other words, when the at least one graphic display object may be displayed by a segment of the display panel, in case when the at least one graphic display object comprises an object display area which is larger than an area of the corresponding segment of the display panel, then the control circuitry may enable a part of the at least one graphic display object to be displayed on the respective segment and the remaining part of the at least one graphic display object to be displayed on the adjacent segment of the respective segment of the display panel. This can ensure a continuous displaying of the least one graphic display object by means of the plurality of segments of the display panel. For example, a part of the graphic display object may be displayed on one segment of the display panel, whereas the remaining part of the graphic display object can be displayed on the adjacent segments. Hence, a continuous and a homogenous display of the at least one graphic display object of various sizes can be displayed by means of the plurality of the segments of the display panel. It is also thinkable, that the at least one graphic display object can be scaled to the size of the area of the corresponding segment of the display panel as desired, such that the object area of a graphic display object with a large object display area can be scaled down, in order to enable the at least one graphic display object to be displayed by only one respective segment of the display panel. Similarly, in case where the object area of a graphic display object is smaller than that of the corresponding segment, then the object area of the graphic display object with a small object display area can be scaled up, so that the graphic display object can fit into the whole area of the respective segment.

In one embodiment, the luminosity sensor arrangement may comprise at least one photo sensitive diode and/or at least one camera. In other words, each of the at least one photo sensitive diode can estimate the intensity of the light from the external light source which may be incident on the respective portion of the display panel corresponding to the respective at least one photo sensitive diode and the corresponding intensity signal can be sent to the control circuitry. Likewise the other photo sensitive diodes can estimate the incident light from the external light source and send the corresponding intensity signals to the control circuitry. Similarly, at least one camera can be used in a similar manner as the at least one photo sensitive diode.

The invention further provides a vehicle with such a display device comprising a pixel matrix and a control circuitry. The display device surrounds an interior seating region of the vehicle and provides a viewing range of at least 270°, preferably 360°. In other words, the display device can be designed in form of a wrap-around display device which can be integrated in the vehicle. The display device may be integrated in such a manner, that the display panel is viewable by a user, who can be a driver of the vehicle, as well as the other passengers sitting on a neighboring front seat as well as sitting on corresponding rear seats. This is of advantage, because this enables the displaying of the at least one graphic display object throughout the display panel with a viewing range of at least 270°, preferably 360°, so that every passenger in the vehicle can be able to access the display device. Such a display panel may comprise a bent surface and/or a folded surface. Furthermore, such a display panel may comprise a plurality of segments which may enable the integration of the display panel on a curved surface and provide the viewing range of at least 270°, preferably 360°.

In one embodiment, in a respective non-actuated state, each pixel element of the pixel matrix may be transparent. This is of advantage, because such a display panel can be integrated in the vehicle, for example, in front of the windscreen, or can be a part of a window screen itself. Furthermore, such a display panel may comprise a large number of transparent organic light emitting diodes (TOLED) as pixel elements, which can be distributed over a total area of display panel. The control circuitry can control an actuation of the pixel elements as per a required location or portion of the at least one graphic display object on the display panel with respect to an optimal viewability of the user. In the respective non-actuated state each pixel element of the display panel may remain transparent. If at a point of time, the at least one graphic display object is needed to be displayed on a particular location of the display panel, then the control unit may actuate the plurality of pixel elements at that particular location, which in turn enables the plurality of pixel elements on that particular location to radiate the monochromatic light or the light of various colors corresponding to that of the at least one graphic display object. Further advantage of the each pixel element in the non-actuated state being transparent, is that a presence of a large display panel, which may be integrated in front of the wind screen, cannot provide a hindrance to the user to drive, because the large display panel may not block the view of the user. As in the non-actuated state, each pixel element of the pixel matrix remains transparent, which in turn allows the user or the passengers of the vehicle not to feel cramped or create a particular negative sense of the interior region of the vehicle. Furthermore, when the pixel elements are transparent, then the display panel may appear as non-existent. This may enable the user or the passengers to perceive their personal space to be unoccupied by the display panel. Furthermore, each portion of the display panel can comprise of a corresponding gate driver, wherein the luminosity of each portion of the display panel can have a single luminosity which can be adjusted by the control circuitry as a function of a respective intensity signal. In other words, the luminosity of the pixel matrix can be controlled by means of the control circuitry portion wise.

In one embodiment, the display panel may comprise a back layer which is designed to provide a change of transparency of the display panel as a function of an electric signal. The back layer can be a so called polymer dispersed liquid crystal (PDLC) or a dynamic scattered liquid crystal (DSLC) or a suspended particle device (SPD) or a monochrome transparent segmented liquid crystal device. The control circuitry may be adapted to adjust the degree of transparency in accordance with a physical environment condition, wherein the control circuitry may be designed to estimate the physical environment condition as signaled by an electronic control unit. In other words, the back layer may comprise a total surface area of the same size or at least 80% of the size of the display panel and may be attached to the pixel matrix by a mechanical means or glued or laminated, which can be known to a person with ordinary skill in the related field. The back layer may comprise a plurality of predetermined subareas each having an adjustable degree of light transmission. The subareas can be, for example, in a quadrilateral and/or a triangular and/or a polygonal shape. Moreover, the subareas can be of different shapes distributed over the entire surface area of the back layer. This other areas can be arranged in such a manner, that they are distributed over the entire surface of the back layer. The subareas of the back layer can be designed to allow a transmission of electricity or are electrically conductive. In order to achieve an adjustable degree of light transmission, a voltage difference can be enabled across each of the subareas. This can enable a transformation of each of the subareas from a transparent state to an opaque state depending on the degree of the voltage difference across that particular subarea. For example, in the case of PDLC or DSLC, it is possible to achieve different degrees of transparency dynamically by adjusting the voltage. Hence, in order to achieve the voltage difference to enable the adjustable degree of light transmission, the subareas may be surrounded by a space, which can enable a wiring across the respective subareas. The wire can enable the voltage difference across that particular subarea. The space can be about 1.0 mm in width. In other words the subareas can be situated at about 0.1 mm apart from each other. The space can be larger up to 0.5 mm but preferably 0.1 mm.

The electronic control unit may signal the control circuitry regarding a motion or a parking situation of the vehicle, based on which the control circuitry may estimate the physical environment condition. According to the estimated physical environment condition, the control circuitry is adapted to adjust the light transmission to a predetermined individual degree for each of the plurality of the subareas of the back layer independent of the others of areas. In other words, in order to transform a particular subarea form a transparent state to an opaque state or in between the transparent state and the opaque state, as in the case of a PDLC or DSLC, or to adjust the predetermined degree of light transmission to a particular subarea, the control circuitry can adjust a voltage difference across the particular subarea in such a manner, that the particular subarea is transformed to the opaque state as per requirement. This can be done in such a manner, that the other remaining subareas remain unaltered and remain in the transparent state. The degree of light transmission can be requested by the second control signal. For example, a particular predetermined region of the back layer can be located behind the pixel matrix of the display panel. The degree of light transmission of the particular predetermined region of the display panel can be adjusted by control circuitry, such that the respective predetermined region can be adjusted between the transparent state and the opaque state. In the transparent state, the degree of light transmission, for example, is at least 40% and/or at least 50% and/or 60% and/or 70% and/or 80%. In the opaque state, the light transmission may be less than 30% and/or less than 20% and/or 10%. In the transparent state, a room and/or an environment corresponding to the field of vision of the user behind the display panel can thus be visible through the display panel in the predetermined subareas which are in the transparent state. In the transparence state, for example with 50% of light transmission and with enough light from outside, the display panel may look transparent. In other words, the user of the vehicle can perceive as if there is no display panel in front of the user. Likewise, the passengers of the vehicle seated behind the user and in the neighboring seat, may perceive as if there is no display panel in front of them, for example when the display panel is integrated in the window screens. This enables the user and/or the passengers to perceive a large interior room inside the vehicle, which in turn enables the user and/or the passengers to feel free and not feel being cramped. Furthermore, the user when driving the vehicle manually, may be less distracted by the display panel in the transparent state than if the display panel appeared in the opaque state. Hence, the user can perceive a large space in the interior room of the vehicle and is not distracted due to the presence of the display panel in front of the user.

In one embodiment, the physical environment condition may comprise a driving situation of the vehicle, wherein the driving situation is one out of a manual driving situation and an autonomous driving situation of the vehicle. In other words, in the case of the manual driving situation, the control circuitry may estimate the physical environment condition corresponding to the manual driving situation and adapt the display of the at least one graphic display object accordingly. In the said case, the displaying of the at least one graphic display object may be adapted in a smaller region on the display panel which may be integrated in front of the wind screen, so that the driver is able to view the environment outside the vehicle through the windscreen as well as the transparent region of the display panel. However, in the case of the autonomous driving situation of the vehicle, the driver may not need to concentrate on the driving of the vehicle and hence, can be seated in a relaxed position and can access the other functionalities provided by the display panel. For example, functionalities corresponding to the infotainment system. Furthermore, in the autonomous driving situation, the control circuitry can activate the pixel elements across the whole area of the display panel so that a large display screen is enabled for the driver as well as the other passengers in the vehicle to be able to access the different functionalities in an enjoyable manner.

The invention also comprises embodiments of the inventive vehicle that comprise features that correspond to features as they have already been described in connection with the embodiments of the display device. For this reason, the corresponding features of the embodiments of the inventive vehicle are not described here again.

The inventive vehicle is preferably designed as a motor vehicle, in particular as a passenger vehicle or a truck, or a bus.

The invention also comprises the combinations of the features of the different embodiments.

In the following an exemplary implementation of the invention is described. The figures show:
- Fig. 1: a schematic illustration of an embodiment of the vehicle comprising a display device;
- Fig. 2: a schematic illustration of the vehicle comprising the display device; and
- Fig. 3: a schematic illustration of an embodiment of the display device.

The embodiment explained in the following is a preferred embodiment of the invention. However, in the embodiment, the described components of the embodiment each represent individual features of the invention which are to be considered independently of each other and which each develop the invention also independently of each other and thereby are also to be regarded as a component of the invention in individual manner or in another than the shown combination. Furthermore, the described embodiment can also be supplemented by further features of the invention already described.

In the figures identical reference signs indicate elements that provide the same function.

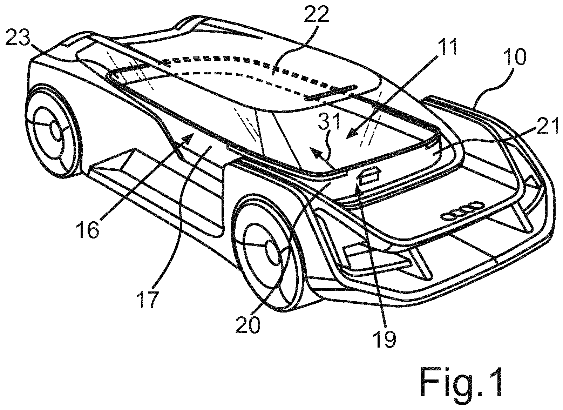

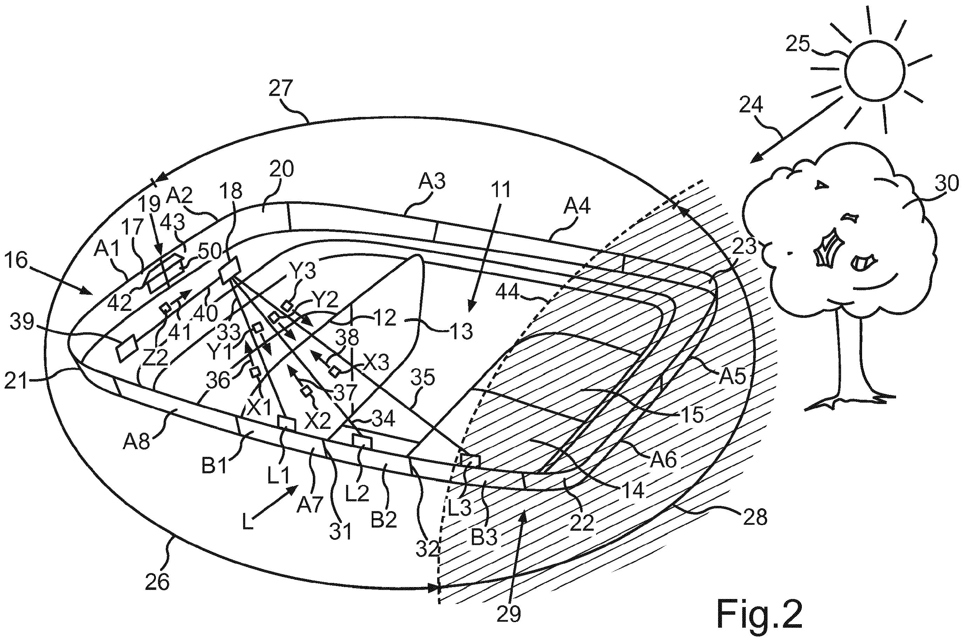

Fig. 1 shows a schematic illustration of a vehicle 10, wherein the vehicle 10 may be a personal vehicle which may be either driven manually or may be is a self-driving vehicle. Furthermore, the vehicle 10 may be a semi-autonomous vehicle. In Fig. 2, an interior seating region 11 of the vehicle 10 is depicted. The vehicle 10 may comprise a first front vehicle seat 12, a second front vehicle seat 13, a first rear vehicle seat 14 and a second rear vehicle seat 15. A user (not shown in the figures) can be seated on the first front vehicle seat 12, wherein the user may be a driver of the vehicle 10. Furthermore, other passengers (not shown in the figures) may be seated on the second front vehicle seat 13, the first rear vehicle seat 14 and the second rear vehicle seat 15, respectively. The vehicle 10 may comprise a display device 16 which may comprise a display panel 17 and a control circuitry 18.

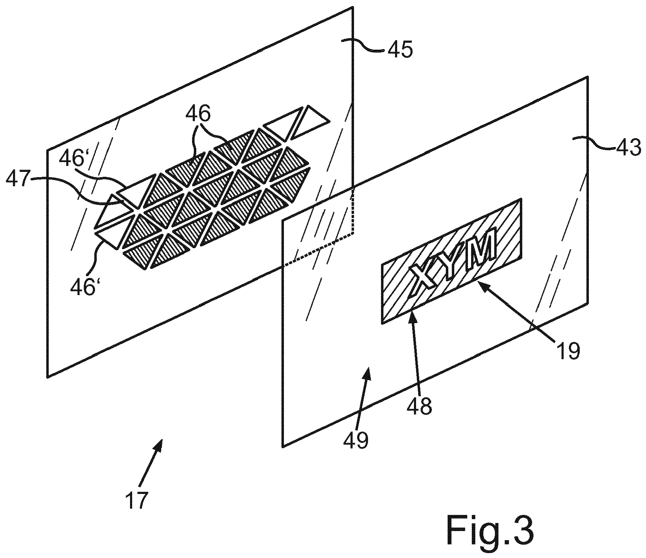

The display panel 17 may comprise a pixel matrix 43, as shown in Fig. 3. The control circuitry 18 may be designed to actuate pixel elements of the pixel matrix 43 for displaying at least one graphic display object 19. The at least one graphic display object 19 may be a logo or an app or a vehicle graphic user interface (GUI).

Furthermore, the display panel 17 may comprise at least one bent surface 20, 21, 22, 23 and/or at least one folded surface. The display panel 17 may comprise a plurality of segments A1, A2, A3, A4, A5, A6, A7, A8, as shown in Fig. 2, wherein each segment A1, A2, A3, A4, A5, A6, A7, A8 may comprise a respective part of the pixel matrix 43. As shown in Fig. 1 and Fig. 2, the display device 16 may surround the interior seating region 11 of the vehicle 10 and provide a viewing range of at least 270°, preferably 360°.

However, in the presence of a light 24 from an external light source 25, for example, the sun, a portion 26 of the display panel 17 facing the external light source 25 will be harder to read. However, a portion 27 of the display panel 17 may have the external light source 25 behind it and a portion 28 of the display panel 17 may lie in a shaded region 29 (shown by means of dashed lines), due to a shadow created by a tree 30 in front of the external light source 25. A boundary of the shaded region 29 may be depicted by a line 44. The portions 27 and 28 may appear much brighter although they may have the same brightness as the portion 26. In order to enable a homogenous perceivable brightness of the display panel 17, the control circuitry 18 may be adapted to adjust an intensity of light 31 radiating from the pixel elements as a function of an intensity signal X1, X2, X3. Intensity signal X1, X2, X3 may be provided by a luminosity sensor element L which may be designed to estimate an intensity of the light 24 from the external light source 25.

For the sake of understandability, the description of the embodiment of the display device 16 is constrained to the segment A7 of the display panel 17. As shown in Fig. 2, the luminosity sensor arrangement L may comprise three luminosity sensors L1, L2, L3, wherein the luminosity sensor arrangement L may comprise at least one photo sensitive diode and/or at least one camera. The luminosity sensors L1, L2, L3 may comprise photo sensitive diodes. The luminosity sensors L1, L2, L3 may be designed to estimate the intensity of the light 24 from the external light source 25 and send the respective intensity signal X1, X2, X3 to the control circuitry 18, respectively. The luminosity sensor L1 may estimate the intensity of the light 24 which is incident on a portion B1 of the segment A7, whereas the luminosity sensor L2 may estimate the intensity of the light 24 which is incident on a portion B2 of the segment A7 and the luminosity sensor L3 may estimate the intensity of the light 24 which is incident on a portion B3 of the segment A7. For the sake of understandability, the portions B1, B2 and B3 are separated by lines 31 and 32, wherein a sum of areas of the respective portions B1, B2 and B3 is an area of the segment A7.

Hence, the luminosity sensor arrangement L is designed to estimate the intensity of the light 24 independently for different portions B1, B2, B3 of the segment A7. As shown in Fig. 2, the portions B1 and B2 may receive a higher intensity of light 24 from the external light source 25, whereas the portion B3 may lie in the shaded region 29. Hence, the portion B3 may receive a lower intensity of the light 24 as compared to the portions B1 and B2. Hence, depending upon the estimated intensity of the light 24 which is incident upon the respective portions B1, B2, B3, the respective luminosity sensors L1, L2, L3 may send the respective intensity signals X1, X2, X3 to the control circuitry 18, for example, wirelessly. The Intensity signal X1 may be sent along a path 33, as shown by an arrow 36. The intensity signal X2 may be sent along a path 34, as shown by an arrow 37 and the intensity signal X3 may be sent along a path 35, as shown by an arrow 38. The control circuitry 18 may be adapted to adjust the intensity of the light 31 radiating from each of the pixel element corresponding to the respective portion B1, B2, B3 of the display panel 17 individually. In other words, upon receiving the respective intensity signals X1, X2, X3, the control circuitry 18 may be adapted to send respective display signals Y1, Y2, Y3 to the corresponding portions B1, B2, B3 of the segment A7. Hence, the control circuitry 18 may enable to adjust the intensity of the light 31 radiating from the pixel elements comprised by the respective portions B1, B2, B3, such that the brightness of the entire segment A7 is homogenous and constant as per a predefined perceived brightness, which may be set by the user for the display panel 17 as a whole or for each segment A1 to A8 individually.

Furthermore, the control circuitry 18 may be designed to actuate at least one of the plurality of segments A1 to A8 and/or customize a display of the at least one graphic display object 19 by the respective segment A1 to A8 as a function of an identification signal Z, wherein the identification signal Z may be sent by an identification sensor 39 upon an identification of at least one person or a predefined user at or within a predefined distance from the respective segment A1 to A8. The identification signal Z may be sent to the control circuitry 18 along a path 40, as shown by an arrow 41. Furthermore, the control circuitry 18 may be designed to enable the display of a part 42 of the at least one graphic display object 19 by the segment A1, such that another remaining part 50 of the at least one graphic display object 19 is displayed by the at least one adjacent segment A2.

As shown in Fig. 3, the display panel 17 may comprise the pixel matrix 43 and a back layer 45. The pixel matrix 43 may be in form of a TOLED screen. The control circuitry 18 may be designed to actuate at least one pixel element of the pixel matrix 43 for displaying the at least one graphic display object 19, wherein in a non-activated state each pixel element of the pixel matrix 43 may be transparent.

The back layer 45 may comprise a plurality of subareas 46, 46' having an adjustable degree of light transmission. The subareas 46, 46' may have quadrilateral shapes and/or triangle shapes and/or polygonal shapes or a mixture of the aforementioned shapes. As shown in the Fig. 3, the subareas 46, 46' may have triangle shapes. The subareas 46, 46' may be designed to allow a transmission of electricity or may be electrically conductive. In order to achieve an adjustable degree of light transmission, a voltage difference may be enabled across each of the subareas 46, 46'. This may enable a transformation of each of the subareas 46, 46' from a transparent state to an opaque state depending on the degree of the voltage difference across the particular subarea 46, 46'. Furthermore, in the case of PDLC or DSLC, the subareas 46, 46' can be transformed to a state between the opaque state and the transparence state. As shown in the Fig. 3, the subareas 46, which are at least covered by the graphic display object 19, are in the opaque state, whereas the other subareas 46', which are not at least covered by the graphic display object 19, are in the transparent state.

Each of the subareas 46, 46' may be separated or may be surrounded by a space 47 between each of them. The space 47 can enable a wiring across the respective subarea 46, 46'. The wiring can enable the voltage difference across a predetermined subarea 46, 46'. The control circuitry 18 may be adapted to adjust the respective light transmission to a predetermined individual degree for each of the plurality of subareas 46, 46' of the back layer 45 independent of each of the respective subareas 46, 46'. For the sake of understandability the other subareas 46', as shown in the Fig. 3, are in the transparent state.

For example, a display region 48 may be selected on the display panel 17, in order to display the at least one graphic display object 19 on the display region 48. The control circuitry 18 may be designed to actuate the pixel elements of the pixel matrix 43 corresponding to the display region 48, such that the pixel elements corresponding to the display region 48 radiate light in the respective colors associated with the at least one graphic display object 19. However, a remaining part of the display panel 17 outside the display region 48, that is a non-display region 49, can remain transparent. In this case, the pixel elements corresponding to the non-display region 49 remain in a non-actuated state due to which each of the pixel elements corresponding to the non-display region 49 can remain transparent. In order to display the at least one graphic display object 19 on the display panel 17, the control circuitry 18 can be designed to determine the respective subareas 46, which are at least partly occupied by the at least one graphic display object 19. The subareas 46, which are at least partly occupied by the at least one graphic display object 19, may be turned opaque by changing the voltage difference across each of the respective subareas 46 corresponding to the display region 48. The control circuitry 18 may be adapted to adjust the light transmission of the set respective subareas 46 to a degree lower than that of the subareas 46', which are not at least partly occupied by the graphic display object 19.

The control circuitry 18 may be adapted to enable the displaying of the at least one graphic display object 19. For the sake of understandability, the at least one graphic display object 19 may be a text message "XYM", for example yellow in color, and with a colored background, which can be, for example, blue in color (represented by means of indented lines with broad spaces). Furthermore, the control circuitry 18 may be adapted to adjust a degree of transparency in accordance with a physical environment condition, wherein the control circuitry 18 is designed to estimate the physical environment condition, as signaled by an electronic control unit (not shown in the figures). Furthermore, the physical environment condition may comprise a driving situation of the vehicle 10, wherein the driving situation is one out of a manual driving situation and an autonomous driving situation of the vehicle 10.

Overall, the example shows how the display device 16 enables the display contents of the at least one graphic display object 19 on the display panel 17 in an efficient manner, as it is provided by the invention.

## Claims

1. Display device (16) comprising:
- a display panel (17) comprising a pixel matrix (43); and
- a control circuitry (18), wherein the control circuitry (18) is designed to actuate pixel elements of the pixel matrix (43) for displaying at least one graphic display object (19), wherein the control circuitry (18) is adapted to adjust an intensity of light (31) radiating from the pixel elements as a function of an intensity signal (X1, X2, X3), wherein the intensity signal is provided by a luminosity sensor arrangement (L) which is designed to estimate an intensity of light (24) from an external light source (25),
**characterized in that**
- the luminosity sensor arrangement (L) is designed to estimate the intensity of the light (24) independently for different portions (B1, B2, B3) of the display panel (17); and
- the control circuitry (18) is adapted to adjust the intensity of the light (31) radiating from each of the pixel elements comprised in the respective portion (B1, B2, B3) of the display panel (17) individually.

2. Display device (16) according to claim 1, wherein the display panel (17) comprises at least one bent surface (20, 21, 22, 23) and/or at least one folded surface.

3. Display device (16) according to any of the preceding claims, wherein the display panel (17) comprises a plurality of segments (A1, A2, A3, A4, A5, A6, A7, A8), wherein each segment (A1, A2, A3, A4, A5, A6, A7, A8) comprises a respective part of the pixel matrix (43).

4. Display device (16) according to claim 3, wherein the control circuitry (18) is designed to activate at least one of the plurality of segments (A1, A2, A3, A4, A5, A6, A7, A8) and/or customize a displaying of the at least one graphic display object (19) by the respective segment (A1, A2, A3, A4, A5, A6, A7, A8) as a function of an identification signal (Z), wherein the identification signal (Z) is sent by an identification sensor (39) upon an identification of at least one person or a predefined user at or within a predefined distance from the respective segment (A1, A2, A3, A4, A5, A6, A7, A8).

5. Display device (16) according to claims 3 or 4, wherein the control circuitry (18) is designed to enable the displaying of a part (42) of the at least one graphic display object (19) by one segment (A1), such that another remaining part (50) of the at least one graphic display object (19) is displayed by at least one adjacent segment (A2).

6. Display device (16) according to any of the preceding claims, wherein the luminosity sensor arrangement (L) comprises at least one photo sensitive diode and/or at least one camera.

7. Vehicle (10) with a display device (16) according to any of the preceding claims, wherein the display device (16) surrounds an interior seating region (11) of the vehicle (10) and provides a viewing range of at least 270°, preferably 360°.

8. Vehicle (10) according to claim 7, wherein in a respective non-actuated state, each pixel element of the pixel matrix (43) is transparent.

9. Vehicle (10) according to claims 7 or 8, wherein the display panel (17) comprises a back layer (45) which is designed to provide a change of transparency of the display panel (17) as a function of an electric signal, wherein the control circuitry (18) is adapted to adjust the degree of transparency in accordance with a physical environment condition, wherein the control circuitry (18) is designed to estimate the physical environment condition, as signaled by an electronic control unit.

10. Vehicle (10) according to claim 9, wherein the physical environment condition comprises a driving situation of the vehicle (10), wherein the driving situation is one out of a manual driving situation and an autonomous driving situation of the vehicle (10).

## Amended claims

### Amended claims in accordance with Rule 137(2) EPC.

1. Display device (16) comprising:
- a display panel (17) comprising a pixel matrix (43); and
- a control circuitry (18), wherein the control circuitry (18) is designed to actuate pixel elements of the pixel matrix (43) for displaying at least one graphic display object (19), wherein the control circuitry (18) is adapted to adjust an intensity of light (31) radiating from the pixel elements as a function of an intensity signal (X1, X2, X3), wherein the intensity signal is provided by a luminosity sensor arrangement (L) which is designed to estimate an intensity of light (24) from an external light source (25),
**characterized in that**
- the luminosity sensor arrangement (L) is designed to estimate the intensity of the light (24) from the external light source (25) independently for different portions (B1, B2, B3) of the display panel (17); and
- the control circuitry (18) is adapted to adjust the intensity of the light (31) radiating from each of the pixel elements comprised in the respective portion (B1, B2, B3) of the display panel (17) individually, so that the display panel appears with a uniform predetermined brightness.

2. Display device (16) according to claim 1, wherein the display panel (17) comprises at least one bent surface (20, 21, 22, 23) and/or at least one folded surface.

3. Display device (16) according to any of the preceding claims, wherein the display panel (17) comprises a plurality of segments (A1, A2, A3, A4, A5, A6, A7, A8), wherein each segment (A1, A2, A3, A4, A5, A6, A7, A8) comprises a respective part of the pixel matrix (43).

4. Display device (16) according to claim 3, wherein the control circuitry (18) is designed to activate at least one of the plurality of segments (A1, A2, A3, A4, A5, A6, A7, A8) and/or customize a displaying of the at least one graphic display object (19) by the respective segment (A1, A2, A3, A4, A5, A6, A7, A8) as a function of an identification signal (Z), wherein the identification signal (Z) is sent by an identification sensor (39) upon an identification of at least one person or a predefined user at or within a predefined distance from the respective segment (A1, A2, A3, A4, A5, A6, A7, A8).

5. Display device (16) according to claims 3 or 4, wherein the control circuitry (18) is designed to enable the displaying of a part (42) of the at least one graphic display object (19) by one segment (A1), such that another remaining part (50) of the at least one graphic display object (19) is displayed by at least one adjacent segment (A2).

6. Display device (16) according to any of the preceding claims, wherein the luminosity sensor arrangement (L) comprises at least one photo sensitive diode and/or at least one camera.

7. Vehicle (10) with a display device (16) according to any of the preceding claims, wherein the display device (16) surrounds an interior seating region (11) of the vehicle (10) and provides a viewing range of at least 270°.

8. Vehicle (10) according to claim 7, wherein in a respective non-actuated state, each pixel element of the pixel matrix (43) is transparent.

9. Vehicle (10) according to claims 7 or 8, wherein the display panel (17) comprises a back layer (45) which is designed to provide a change of transparency of the display panel (17) as a function of an electric signal, wherein the control circuitry (18) is adapted to adjust the degree of transparency in accordance with a physical environment condition, wherein the control circuitry (18) is designed to estimate the physical environment condition, as signaled by an electronic control unit.

10. Vehicle (10) according to claim 9, wherein the physical environment condition comprises a driving situation of the vehicle (10), wherein the driving situation is one out of a manual driving situation and an autonomous driving situation of the vehicle (10).
